(19) Europäisches Patentamt
European Patent Office
Office européen des brevets

(11) **EP 4 460 595 B1**

(12) **EUROPEAN PATENT SPECIFICATION**

(45) Date of publication and mention
of the grant of the patent:
**04.03.2026 Bulletin 2026/10**

(21) Application number: **23700144.1**

(22) Date of filing: **05.01.2023**

(51) International Patent Classification (IPC):
*D01F 2/02* (2006.01)   *D01D 5/06* (2006.01)
*D01F 13/02* (2006.01)   *C08B 15/06* (2006.01)
*C08B 16/00* (2006.01)   *D01D 1/02* (2006.01)
*D01F 2/00* (2006.01)   *D01F 2/24* (2006.01)
*D04H 3/013* (2012.01)

(52) Cooperative Patent Classification (CPC):
**D01D 5/06; C08B 15/06; C08B 16/00; D01D 1/02;
D01F 2/00; D01F 2/02; D01F 2/24; D01F 13/02;
D04H 3/013**

(86) International application number:
**PCT/FI2023/050009**

(87) International publication number:
**WO 2023/131747 (13.07.2023 Gazette 2023/28)**

(54) **CELLULOSIC TEXTILE FIBRE**

CELLULOSE TEXTILFASER

FIBRES TEXTILES CELLULOSIQUES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **07.01.2022 FI 20225011**

(43) Date of publication of application:
**13.11.2024 Bulletin 2024/46**

(73) Proprietor: **Infinited Fiber Company Oy
02150 Espoo (FI)**

(72) Inventors:
• **SIREN, Sakari
02150 Espoo (FI)**
• **VEIJOLA, Elias
02150 Espoo (FI)**
• **NUOPPONEN, Markus
02150 Espoo (FI)**

(74) Representative: **Laine IP Oy
Porkkalankatu 24
00180 Helsinki (FI)**

(56) References cited:
**WO-A1-2021/181007    WO-A1-2021/205060
CN-A- 102 766 216    US-A1- 2016 138 200
US-A1- 2019 062 950**

**Description**

FIELD

The present invention relates to a method for the manufacture of cellulose carbamate textile fibre, to a cellulose carbamate textile fibre obtainable by this method, as well as to uses thereof and articles manufactured using the cellulose carbamate textile fibre.

BACKGROUND

Cellulose, the most abundant renewable organic material on earth, exhibits outstanding properties for fibre applications. The viscose process, despite its environmental challenges, is still the most widely used technology to manufacture regenerated cellulose fibres and films. Thus, there is need to develop simpler and sustainable textile fibre preferably having improved properties compared to traditional production processes.

European patent application publication EP 1470162 A1 describes the manufacture of cellulose carbamate from high quality cellulose solutions. Cellulose carbamate is known as an environmentally-friendly alternative for the production of manmade cellulosic fibres. International patent application publications
EP 1509548 A1 describes production of fibres, films and other moulded bodies from cellulose carbamate by directly dissolving in sodium hydroxide solution and spinning the solution into acidic spin baths. WO 2021/038136 A1 provided a method to pretreat cellulose for use in the formation of cellulose carbamate. The cellulose carbamate obtained from carbamation process was dissolved for production of cellulose carbamate fibres by the wet spinning process. Wet spinning of cellulose carbamate dope was carried out using an acidic spin bath optimized for cellulose carbamate process containing e.g. sodium sulphate and free sulphuric acid.

Document GB 2164942 B presents a process for dissolving cellulose carbamate and precipitating the cellulose carbamate from an alkaline solution with a precipitant solution containing sodium carbonate. The solution in the spinning and precipitation also containing sodium hydroxide. WO 2018/169479 presents regenerated cellulose fibres spun from an aqueous alkaline spin dope. The method introduces a nanofiller additive to enhance the strength of the cellulosic fibre. WO 2020/171767 also describes spinning the cellulose spin dope in an alkaline coagulation bath having pH of more than 7.0. Document US 2016/138200 discloses a method for the recovery of solvent in a process for preparation of regenerated cellulosic fibres using sodium hydroxide as solvent for cellulose dissolving in the manufacturing of a cellulose spinning dope. Sodium hydroxide present in the spinning dope is at least partially recovered and recycled as sodium hydroxide from a cellulose fibre regeneration or cellulose coagulation. The cellulose fibre regeneration or cellulose coagulation step consists of a bath into which cellulose spinning dope is injected. Recovered sodium hydroxide may be directly or indirectly recycled from a cellulose fibre regeneration or cellulose coagulation step to a cellulose dissolving step.

Carbamate hydrolysis stops when coagulating takes place in an acid spin bath. When spinning into alkaline coagulation baths, regeneration of the cellulose takes place gradually during coagulation and stretching of the tow. However, while having succeed to form shaped bodies, alkaline spinning technology has not so far been able to produce e.g. passable strength properties and textile-quality fibres.

Thus, despite the many recent research and development projects in the field, there still exists a need to provide a further manufacturing method allowing better use of textile waste material.

OBJECTS AND SUMMARY OF THE INVENTION

It is an aim of the present invention to overcome at least some of the problems associated with the prior art and provide a man-made cellulose carbamate fibre of textile quality. By means of embodiments it has surprisingly been found that by modifying the spin bath and the conditions under which fibres are stretched, man-made cellulose carbamate fibres having improved properties can be obtained. In particular, the present method allows manufacturing cellulose carbamate textile fibres at least partially from waste material, and yet to obtain fibres that are strong enough for textile industry.

The invention is defined by the features of the independent claims. Some specific embodiments are defined in the dependent claims.

According to an aspect, the present invention relates to a method for the manufacture of cellulose carbamate textile fibre, comprising the steps of

- dissolving cellulose carbamate having a maximum nitrogen content of 2.5 wt-% in an aqueous sodium hydroxide medium to form a cellulose carbamate dope, wherein the dope comprises zinc;
- spinning the cellulose carbamate dope into an alkaline aqueous spin bath in a spinning unit, to form filaments or filament tow, wherein a temperature of the alkaline aqueous spin bath is in the range of 35-60 °C; and
- stretching the filaments or filament tow to obtain cellulose carbamate fibres;

wherein a sodium hydroxide content of the spin bath is maintained within a range of 1.0-1.99 wt-% and a sodium carbonate content of the spin bath is maintained at at most 30 wt-%, by withdrawing a portion of the alkaline spin bath from the spinning unit for recycling.

According to further aspects, the inventions relate to a cellulose carbamate textile fibre obtainable by this method, as well as to use of cellulose carbamate textile fibre obtainable by this method in yarn, textile, woven or knitted fabric, a textile garment or non-woven. Still further, the invention relates to a yarn, textile, woven or knitted fabric, a textile garment or non-woven article, comprising the cellulose carbamate textile fibre obtainable by this method.

BRIEF DESCRIPTION OF THE DRAWINGS

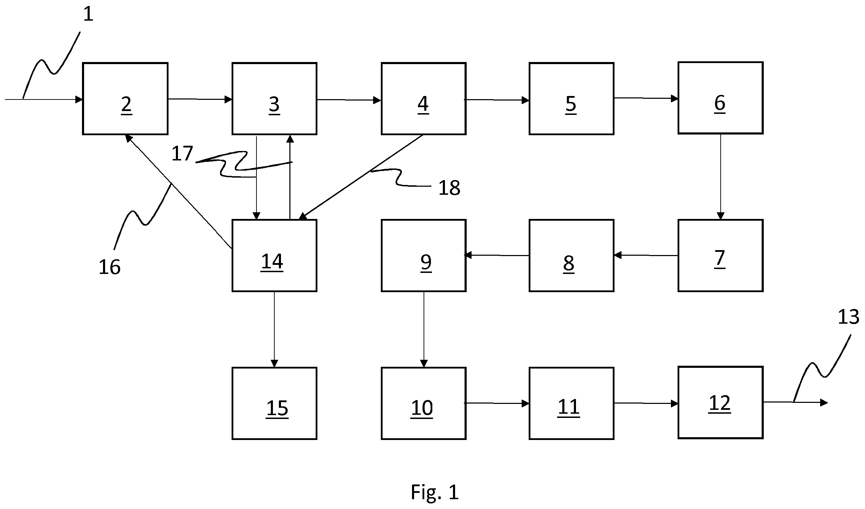

FIGURE 1    schematically illustrates a method according to an embodiment.

DETAILED DESCRIPTION

Man-made cellulose fibre is a fibre whose structure and properties are modified during the manufacturing process. Man-made fibres are to be distinguished from natural fibres such as silk, cotton, and wool. Man-made cellulose fibres are made of the same cellulose polymers that make up e.g. cotton, hemp, flax, and the structural fibres of wood. In the case of man-made cellulose fibre, the cellulose is acquired in a modified state e.g. cellulose from wood pulping operations, or it is modified in order to be regenerated into practical cellulose-based fibres.

Cellulose carbamate textile fibre in the present invention refers to fibres in the form of staple fibre, shortcut fibre, flock, filament yarn, tow of filaments. Cellulose carbamate textile fibre in the present invention refers also to fibres used in non-woven applications. The term filament in this description is also to be understood to cover a filament tow.

The linear density, a measure of the mass per unit length of a fibre, is used by fibre manufacturers as a measure of fineness. The linear density in decitex (dtex) is the weight, in grams of a 10,000 m length of fibre. Decitex, is the approved SI unit for linear density. Linear density in dtex is measured according to ISO 1973:2021.

Tenacity is the measure of strength of a fibre. It is usually defined as the ultimate (breaking) force of the fibre (in gram-force units) divided by linear density. Tenacity is defined as the ratio between ultimate (breaking) force/load and linear density of specimen. Tenacity of a specimen may be expressed as the units of cN/dtex, gram/tex, gram/denier, Newton/tex etc. Fibre tenacity (cN/dtex) is measured according to ISO 5079:2020.

In textiles, the term initial modulus is used to describe the initial resistance to extension of a textile material, and it is measured using ISO 5079:2020. In other words, this is a measure of fibre's resistance to small initial extension. When the fibre has high resistance to stretching, it will have high modulus. The tangent of angle between initial curve and horizontal axis is equal to the ratio of stress and strain. This ratio is termed as initial modulus but, in textile science, it is known as initial Young's modulus. Initial modulus of textile materials depends on chemical structure, crystallinity, orientation of fibre etc. Initial modulus is tan $\alpha$ = stress / strain.

Elongation at break is the elongation of the fibre produced by the breaking force. Breaking extension (%) = elongation at break x 100 / original length of specimen. It is measured using ISO 5079:2020.

Nitrogen content in cellulose carbamate textile fibre or in cellulose carbamate refers to amount of nitrogen chemically bound as carbamate groups in cellulose. The nitrogen content (in wt-% of the total weight) is measured according to SFS 5505:1988.

The average intrinsic viscosity in ml/g is determined by ISO 5351:2010 (CED viscosity measurement), average being the arithmetic mean. The content of p-terephthalate and/or p-terephthalic acid and/or unhydrolyzed or partly unhydrolyzed polyester (in wt-%) is determined by gas chromatography-mass spectrometry (GC-MS), as explained in more detail in the Experimental section (Examples 4 and 6).

In the present description, when weight percentage (wt-%) are used, it is meant the weight percentage within the relevant material, unless otherwise indicated.

The raw material can be different types of cellulose-rich textile waste, e.g. post-consumer waste, pre-consumer waste, industrial textile waste or side streams from textile manufacturing. The textile waste may be collected and sorted. The terms recycled waste material and waste material may also be used interchangeably.

Unless specified otherwise, the term hot bath shall be taken to mean a bath containing liquid having a temperature in the range of 75 degrees Celsius to 100 degrees Celsius.

According to a first aspect, the invention relates to a method for the manufacture of cellulose carbamate textile fibre, comprising the steps of

-    dissolving cellulose carbamate having a maximum nitrogen content of 2.5 wt-% in an aqueous sodium hydroxide medium to form a cellulose carbamate dope, wherein the dope comprises zinc;

- spinning the cellulose carbamate dope into an alkaline aqueous spin bath in a spinning unit, to form filaments or filament tow, wherein a temperature of the alkaline aqueous spin bath is in the range of 35-60 °C; and
- stretching the filaments or filament tow to obtain cellulose carbamate fibres;

wherein a sodium hydroxide content of the spin bath is maintained within a range of 1.0-1.99 wt-% and a sodium carbonate content of the spin bath is maintained at at most 30 wt-%, by withdrawing a portion of the alkaline spin bath from the spinning unit for recycling.

By "spinning the cellulose carbamate dope into an alkaline aqueous spin bath in a spinning unit, to form filaments or filament tow" it is meant that the cellulose carbamate is coagulated and while being extruded through spinnerets it will be shaped into filaments.

The present method is based on studies on cellulose carbamate pre-treatment, dissolution in NaOH and wet spinning for textile fibre using an alkaline spin bath. It was observed that spinning of the carbamate fibre can be enhanced by changing the composition of the spin bath, whereby a cellulose carbamate product with improved properties can be obtained. If coagulation in alkaline spin bath is slow, the fibres, filaments or filament tows having specified textile fibre properties are not obtained, namely a linear density of 0.8-1.8 dtex, a tenacity of 2.0-2.9 cN/dtex, and optionally an initial modulus of 50-120 cN/dtex is not achieved. It is thus important that the coagulation happens at an optimum rate.

To accelerate fibre coagulation, the amount of sodium hydroxide needs to be at a certain, low level. The portion of alkaline spin bath withdrawn from the spinning unit (which has the composition of the spin bath at that moment of time, at that location) contains sodium carbonate and less than 2 wt-% sodium hydroxide, preferably 1.5 to 1.99 wt-%, in particular 1.6 to 1.9 wt-% sodium hydroxide. The sodium carbonate content of the spin bath is maintained at at most 30 wt-%.

In the prior solutions, such as in WO 2020/171767, the coagulation bath comprises sodium hydroxide, and the only numerical range given is a preferred 3-10 wt-% of sodium hydroxide. Examples of sodium hydroxide content given are 5.3 and 5.6 wt-%, i.e. significantly higher than in the present invention. The tenacities of the carbamate fibres obtained in this document were 16.9 and 18.9 cN/tex (Table 1), i.e. 1.69 and 1.89 cN/dtex. The tenacity values obtained by the present method can lead to carbamate fibres with tenacities of at least 2.0 cN/dtex, even at least 2.3 cN/dtex. Tenacity is the measure of strength of the fibre, and thus present cellulose carbamate fibres having the high strength can be used along with other fibres common in yarn and textile manufacturing, and at least 2.0 cN/dtex is considered an acceptable strength for a textile fibre. This limit was not reached in the examples of WO 2020/171767. Furthermore, in WO 2020/171767, it is taught that zinc normally starts precipitating (in the form of zinc hydroxide) when the NaOH concentration approaches about 2 wt-% in the washing liquid, thus indicating to a person skilled in the art that the amount of sodium hydroxide should not go down to 2 wt-%.

In the prior art solution disclosed in WO 2018/169479, which concerns regenerated cellulose fibres in general, and not only cellulose carbamate, the preferred spin bath is diluted sodium hydroxide (concentration of sodium hydroxide substantially below the sodium hydroxide concentration in the spin dope, which is given as 6-9 %), and the spin bath is preferably kept at a temperature of about 10-40 °C. Examples of celluloses used for preparing the spin dope in this document include natural cellulose, such as pulp, cotton and cotton linter; and regenerated cellulose obtained from a cellulose solution, such as viscose or lyocell. The cellulose may be derivatised, for example carbamated. This document does not have any examples, and no concrete values for the sodium hydroxide concentration of the spin bath. Only wet tensile strength is given, but no examples how the values can be obtained.

Document GB 2164942 B mentions a maximum content of NaOH as being 3 wt-%, while also mentioning values as high as 5-6 wt-% in the spin bath, and using 3 wt-% in its examples, producing carbamate fibres which had fully satisfactory properties according to the patentee. The properties are not specified. The prior art thus provides significantly higher amounts of sodium hydroxide in the spin bath.

In contrast to the prior art, in the present method the spinning is optimised to cellulose carbamate to obtain optimal fibre properties, most importantly a maximum strength for the resulting fibres. Thus, an aim is that a part of the zinc is soluble in spinning bath and is recycled and a part of the zinc is removed from the spin bath with the fibre or filament, and is later washed out and recycled separately. Thus, the amount of zinc precipitated in the spin bath is minimised. Furthermore, the temperature of the spin bath, namely 35-60 °C, has been optimised to speed up the formation of the fibre, while increasing solubility of zinc, even though the sodium hydroxide content of the spin bath is low. Thus, the combination of the selected content of sodium hydroxide and the temperature in the spin bath has been observed to lead to improved results.

In the preferred (1.5 to 1.99 wt-%) or even more preferred (1.6 to 1.9 wt-%) range of sodium hydroxide the precipitation of zinc in the spin bath is also minimised. A further advantage of using the preferred ranges of sodium hydroxide in the spin bath is that at such ranges it is still economically reasonable to recycle the spin bath. The volumes of spin bath that need to be recycled, i.e. treated to lower the amount of sodium hydroxide in it, would be too large for commercial uses, if the sodium hydroxide content of the spin bath was not maintained at the minimum of 1.0 wt-%. Indeed, recycling of the spin bath comprises various precipitation and evaporation steps, which require not only initial investment in equipment but also increase operation costs and energy needs. Therefore, it is also important to try to avoid that zinc remains in the spin bath.

It is thus an essential feature of the present invention that the spin bath is recycled, and that by this recycling, the sodium hydroxide and sodium carbonate contents of the spin bath are maintained in the indicated ranges. Indeed, the cellulose carbamate dope is alkaline and thus sodium, in particular sodium hydroxide enters the spin bath also together with the cellulose carbamate dope, thereby increasing the sodium hydroxide content of the spin bath. Therefore, the amount of sodium hydroxide in the recycled spin bath (i.e. spin bath for which the sodium hydroxide content has been lowered) that is returned to the spin bath needs to be lower than the desired amount of sodium hydroxide in the spin bath. Zinc is also recovered and recycled to the cellulose carbamate dope.

The amount of sodium hydroxide and sodium carbonate in the spin bath varies, during use of the process, from one location of the spin bath to another, since sodium hydroxide is added to the spin bath in the dope. The above defined amounts are an arithmetic average of the amounts within the spin bath.

A part of the spin bath can be removed from the spin bath at any suitable location or at several different locations, such as from one or more points on the bottom of the spin bath or as an overflow of the spin bath. It is also possible to remove a part of the spin bath from the spinning bath (i.e. the vessel used for spinning), or from the recycling conduit(s).

Furthermore, the cellulose carbamate dope preferably has certain qualities, such as a suitable viscosity. In practice, if the viscosity of the dope is over 15 Pas (at 20 degrees Celsius), handling of the dope (pumping, filtration, removal of air, etc.) becomes very difficult. Also the concentration of cellulose carbamate in the spin dope needs to be high enough, preferably at least 8.0 wt-%, for optimal spinning. Viscosity of the cellulose carbamate dope is increased by impurities in the dope, un-homogeneous raw materials and high molecular weight of the cellulose chains. Therefore, according to an embodiment, the cellulose carbamate has a polydispersity index value (also called polydispersity) in the range of 2.0 to 5.0, preferably 2.0-4.0, more preferably 2.0-3.5 as measured by Gel Permeation Chromatography (GPC)/Size Exclusion Chromatography (SEC) instrument, and an average intrinsic viscosity of 147 to 225 ml/g and 161 to 197 ml/g, as measured by CED viscosity measurement according to ISO 5351:2010. These properties are particularly important when waste raw material is used, as in a preferred embodiment, as the tailoring of the properties of the cellulose carbamate allows obtaining high quality dope. Thus, in order to obtain optimal properties in the cellulose carbamate fibres, the viscosity of the spin dope should be at most 15 Pas (at 20 degrees Celsius), which requires that the cellulose carbamate has the above-indicated polydispersity and intrinsic viscosity, i.e. have a homogenous and narrow enough molecular weight distribution and a small enough particle size.

The polydispersity index may be modified e.g. by adjusting temperature, residence time and acid concentration in an acidic treatment step, by adjusting pH and ozone charge in an ozone bleaching and/or decolourisation step, by adjusting the hydrogen peroxide charge, pH and residence time in a hydrogen peroxide bleaching step and/or by adjusting pH and alkalinity, residence time, urea charge, carbamation temperature and pressure in a carbamation step.

According to an embodiment, the cellulose carbamate comprises cellulose carbamate obtained from cellulose containing waste material, the waste material being preferably selected from a group consisting of textile waste, paper waste, cardboard waste, agro waste and mixtures thereof, preferably in an amount of at least 25 wt-% of the cellulose carbamate, preferably at least 50 wt-% of the cellulose carbamate. By waste material it is meant material collected for recycling, such as used textiles, papers or cardboard. Agro waste means various plant-based materials that cannot be used as human or animal food, such as crop residues, weeds, leaf litter, sawdust and forest waste. Furthermore, straw can be used as raw material.

According to a particular embodiment, the cellulose carbamate comprises cellulose carbamate obtained from textile waste, in an amount of at least 50 wt-% of the cellulose carbamate, preferably at least 90 wt-% of the cellulose carbamate. According to an embodiment, the raw material of the textile fibre is 100 % textile waste, i.e. only textile waste is used as raw material. The present fibres and their manufacturing method thus allow manufacturing textile fibres that comprise recycled material, and still have properties that allow them to be used in textile industry, such as for weaving.

The cellulose-based material may comprise virgin cellulose and/or may comprise recycled cellulose from sources such as jute, hemp, kenaf, cotton, bagasse and the like. The manmade cellulose carbamate fibre according to embodiments has good resistance against wear, *i.e.* has good strength properties. The fibre has a similar initial modulus to cotton, whereby fibres of embodiments described herein provide good strength properties to threads, yarns and fabrics made from a combination of virgin cellulose, e.g. cotton intertwined with the present fibres.

In one embodiment, the cellulose carbamate textile fibre comprises 90 wt-% or more, in particular 95 wt-% or more, by dry weight, of cellulose. Non-cellulosic components such as plastics, nylon, polyethylene, polypropylene, elastane and possibly nitrogen containing impurities such as biuret may also be present in small amounts. Further, spin-finishing chemicals are used for modifying processability in e.g. carding and/or yarn production. Optionally, other additives may be incorporated into the cellulose carbamate textile fibre. The optional chemicals may be used to modify the processability and/or to modify physical properties such tensile strength, modulus or elasticity of the final product. The optional chemical may act as a tracer. Processing aids, surfactants, lubricants, wetting agents, stability, colour and brightness modifiers, delustrants such as titanium dioxide, e.g. anatase or rutile titanium dioxide, dyes, pigments, flame retardants, fillers, anti-statics and auxiliaries to reduce friction of the fibre may also be present in the cellulose carbamate textile fibre.

In a further embodiment, the cellulose-based material comprises recycled waste material, suitably at least 50 wt-%, preferably at least 75 wt-% of the cellulose of said cellulose-based material is formed by recycled textile waste. The manmade fibres can be combined with virgin cotton fibres and or mechanically recycled cotton fibres, with which they may intertwine to provide threads or yarns with interesting properties. Thus, the manmade fibres, e.g. optionally manufactured from chemically recycled cotton, can be used to replace at least a portion of virgin cotton in threads, yarns and in textiles, and other articles comprising cellulose carbamate fibres.

Indeed, according to an embodiment, at least 50 wt-% of the raw material of the textile fibre is cellulose-containing waste, and at least 50 wt-% of the cellulose-containing waste is textile waste. It is also possible to use at least 55, 60, 65, 70, 75, 80, 85, 90, 95 or 100 wt-% of cellulose-containing waste as raw material. Of this cellulose-containing waste, at least 50 wt-% is textile waste, and textile waste can be at least 55, 60, 65, 70, 75, 80, 85, 90, 95 or 100 wt-% of the cellulose-containing waste. As will be discussed below, the cellulose-containing waste can also comprise for example paper or cardboard waste, or polycotton blends.

The cellulose may be from various sources and in the form of various pulps. In one embodiment, the cellulose is selected from the group consisting of chemical pulp, mechanical pulp, thermomechanical pulp, chemical thermomechanical pulp, and a mixture thereof.

In a further embodiment, the chemical pulp is selected from the group consisting of organosolv pulp, soda pulp, dissolving pulp, kraft pulp, sulphite pulp, hot water extraction pulp, and a mixture thereof. In embodiments, paper grade pulp is used. In further embodiments, dissolving grade pulp is used. Recycled pulps such as deinked pulp are also useful in embodiments. In a particular embodiment, the cellulose is a dried dissolving pulp.

The origin of the feedstock can be either the virgin form of the chemical or dissolving pulp or the recycled feedstocks such as recycled paper and/or cardboard containing chemical pulp or dissolving type pulp.

Natural plant fibres as such in or in the form of chemical pulp or dissolving pulp are also useful as feedstocks. The origin of natural plant fibres can be either their virgin forms or natural plant fibre containing textiles or recycled natural fibre containing textiles. Natural plant fibres include seed fibres such as cotton and kapok; bast fibres such as hemp, jute, kenaf, ramie, abaca and linen (flax); leaf fibres such as manila, sisal, pineapple and banana; fruit fibres such as coir.

In one embodiment, the cellulose is obtained from recycled cellulose selected from the group consisting of paper, cardboard, cotton, cotton linter, wheat straw, rice straw, corn stover, hemp, kenaf, bagasse, bamboo, flax, jute and a mixture thereof. Embodiments of the method are particularly effective in the pre-treatment of such demanding pulps having multiple fibril layers such as cotton, cotton linter, hemp, flex, linen and other stalk and seed fibres.

Similarly, virgin sources of cellulose are equally suitable. Thus, in an embodiment the cellulose is obtained from virgin cotton, virgin cotton linter, virgin wheat straw, virgin rice straw, virgin corn stover, virgin hemp, virgin kenaf, virgin bagasse, virgin bamboo, virgin flax, virgin jute and a mixture thereof.

Embodiments relate to the manufacture of a cellulose carbamate textile fibre. In one embodiment, said method comprises the steps of pre-treating cellulose-based material, performing cellulose carbamation to form cellulose carbamate, providing a cellulose carbamate dope by dissolving the cellulose carbamate in an aqueous alkaline medium to form a dope, spinning the cellulose carbamate dope by feeding the dope into a spinning unit exhibiting an aqueous spin bath, and coagulating the cellulose carbamate from the dope into the aqueous alkaline spin bath to form cellulose carbamate filaments or filament tow, and stretching the filaments or filament tow in one or more stretching units and optional washing in one or more washing units, optionally cutting, to obtain cellulose carbamate fibres. The cellulose carbamate textile fibre manufactured by the method may be in the form of a filament or in the form of a staple fibre.

The cellulose carbamate may be prepared by pre-treating cellulose-based material, and performing cellulose carbamation on the pre-treated cellulose-based material. In an embodiment, the cellulose-based textile material is pre-treated by mechanically treating it to predetermined particle size, the mechanically treated material is the subjected to an acidic treatment and an alkaline treatment in a cooking liquor, in desired order, and optionally to a bleaching or other decolorisation treatment. In embodiments the pre-treatment of cellulose may comprise the steps of providing a mixture comprising cellulose, and a liquid, and mechanically working the mixture, *e.g.* by shear mixing in a continuous mechanical mixing device. Such pre-treatment is disclosed for example in WO 2021/181007.

During treatment of cellulose, comprising providing a mixture having a solid content, said mixture comprising cellulose, and a liquid, the mixture preferably has an initial solid content of at least 50 % by weight of the mixture, preferably the initial solid content is 50 % or more by weight of the mixture, for example more than 50 % by weight of the mixture such as 51 % by weight of the mixture, 52 % by weight of the mixture or for example, 55 % by weight of the mixture, suitably at least 65 % by weight of the mixture, particularly up to 75 % by weight of the mixture, most preferably up to 71 % or 72 % or 73 % or 74 % by weight of the mixture. Mechanical working of extra high consistency pulps, such as these as compared to low consistency pulps provides improved dislocation of lamella in fibre cell walls leading to improved absorption of chemicals such as urea on a molecular level in the mixture, or pulp. The initial solid content of at least 50 wt-% of the mixture ensures efficient handling of the cellulose, *i.e.* that the cellulose walls are acted on by sufficient shear forces to effectively break down cell walls and increase accessibility of the cellulose fibrils of solvents and chemicals. An initial solid content of lower than 50 wt-%, such as less than about 45 % by weight results in a less efficient handling of the cellulose. Thus, when urea is added, it is advantageous that the solid content is 50-75 wt-%. In embodiments, it is preferred that the solid content does not exceed 90 % by weight of the mixture, preferably the solid content does not exceed 75 % by weight of the mixture. Maintaining a high consistency pulp in which the solid content does not exceed 90 % by weight of the mixture, preferably does not exceed 75 % by weight of the mixture, ensures that hornification or recrystallisation due to deactivation caused by losing free hydroxyl groups does not occur, and thus the cell wall structure is not closed to absorbing chemicals.

Between the limits described above, space is sufficient so that shear forces can act on the cellulose without tearing fibrils from the surface of the cellulose and so that accessibility of the fibrils on the fibre cell walls to solvents and chemicals is increased, which is optimal. The mixture having solid contents in the above described limits is optimal for cotton for example, as the six layer fibril structure is not wetted through at such solid contents. When cotton is wetted through, the fibril structure locks and it becomes even more difficult to break open the fibril structure to increase accessibility of the cellulose carbamate fibres.

The carbamation may be carried out for example as disclosed in Finnish patents FI 112869, FI 112795, and in Finnish patent application FI 20195717.

The carbamate group is stable in slightly alkaline conditions, in neutral conditions and in acidic conditions (e.g. under alkaline spinning and stretching conditions). The carbamate group hydrolyses in concentrated alkaline conditions (e.g. dissolved cellulose carbamate hydrolyses in aqueous alkaline solution having NaOH content of at least e.g. 6.5 % by weight of dope). Cellulose carbamate starts to hydrolyse instantly after dissolving in alkaline conditions for making a dope and some carbamate groups hydrolyse during dissolution de-aeration of the dope. The higher the temperature of the dope and the longer the delay between dissolving and coagulation, the higher the rate of hydrolysis and the lower the amount of carbamate groups bound in cellulose i.e. the nitrogen content bound in cellulose. The rate of the hydrolysis determines the degree of substitution of cellulose carbamate. In an embodiment, the nitrogen content of the cellulose carbamate may be adjusted by changing dissolution conditions, such as time, temperature and/or sodium hydroxide concentration. The nitrogen content for wet spinning of cellulose carbamate is adjusted to produce textile-quality fibres.

In some embodiments, the cellulose carbamate has intrinsic viscosities of 147 to 225 ml/g, preferably 161 to 197 ml/g, based on the CED viscosity measurement according to ISO 5351:2010. These intrinsic viscosities correspond to average degree of polymerisation (DP) of the cellulose carbamate of 181 to 290, respectively 200 to 250. In order to have cellulose carbamate that is suitable for wet spinning of fibres, the degree of polymerisation of the cellulose carbamate is preferably reduced from conventional values to the range of values described here.

According to another embodiment, the nitrogen content of the cellulose carbamate is 0.5-2.0 wt-%, preferably 0.8 to 1.5 wt-%, of the total weight of the cellulose carbamate, measured according to SFS 5505:1988.

In one embodiment, polydispersity (PD) of the cellulose carbamate is adjusted with an acid, such as mineral or organic acid, or a combination of acids. Sulphuric acid can be employed as an acid for adjusting the PD. It is beneficial for the optimum molecular weight distribution of the feedstock, that PD adjustment by acidic treatment step is included either in the preparation of cellulose feedstock or that the feedstock is treated with acid prior to mixing the cellulose with urea in carbamation, and preferably before alkaline treatment for the at least partial hydrolysis of polyester. A reduction in the polydispersity index to a value in the range of 2.0 to 5.0, preferably 2.0 to 4.0, most preferably 2.0 to 3.5, from the conventional values of conventional cellulose carbamate (which typically have a polydispersity index of 8-11) provides a cellulose carbamate, which in turn provides fibres with improved tensile strength. Spun fibres having improved yield tenacity can be obtained by using cellulose carbamate polymer with a narrower molecular weight distribution (a lower polydispersity index) coupled with a lower average intrinsic viscosity compared to material comprising a wider molecular weight distribution with a higher average intrinsic viscosity, i.e. the properties disclosed herein. Dissolution of cellulose carbamate having an optimal average degree of polymerisation coupled with optimal polydispersity is improved as a consequence of the cellulose carbamate dope being more homogenous. The nitrogen content of the cellulose carbamate can be modified e.g. by adjusting pH and alkalinity, residence time, urea charge, carbamation temperature and/or carbamation pressure in a carbamation step.

After pre-treating and carbamation to provide cellulose carbamate, the carbamate is, in an embodiment, dissolved in an alkaline aqueous medium to provide a cellulose carbamate dope. In one embodiment, the cellulose carbamate is dissolved in an aqueous alkaline solution made of sodium hydroxide and zinc salts, preferably zinc oxide and/or zinc hydroxide. The addition of zinc has been shown to improve the solubility of cellulose carbamate and improves the stability of the cellulose carbamate solution. The alkaline solution is made from sodium hydroxide and zinc oxide and/or zinc hydroxide, whereby zincate is formed. Thus, in embodiments the alkaline solution comprises sodium zincate.

According to one specific embodiment, the cellulose carbamate dope comprises 8-11 wt-%, preferably 8.5-10 wt-%, of cellulose carbamate, 5-8 wt-% sodium hydroxide and 0.08-1.6 wt-%, preferably 0.08-1.2 wt-%, of zinc. The dope may also comprise processing aids and/or other additives. The weight percentages (wt-%) being calculated from the total weight of the cellulose carbamate dope. If zinc oxide (ZnO) is used, the amounts are 0.1-2 wt-%, preferably 0.1-1.5 wt-%. It is also possible to use other zinc compounds, such as zinc hydroxide or mixture of zinc oxide and hydroxide for preparation of sodium zincate. Indeed, the cellulose carbamate may be dissolved in an aqueous alkaline solution made of sodium hydroxide and zinc oxide.

According to an embodiment, the dope has a viscosity 15 Pas (at 20 degrees Celsius) or less, suitably in the range of 4-15 Pas, preferably 4-10 Pas, as measured by ASTM D1343-93:2019. These conditions are believed to be most optimal for the formation of good quality, strong textile fibres, as they, together with the spin bath, ensure that the fibre or filament is formed at an appropriate speed, which then in turn ensures that it can be stretched to a sufficient degree. Such fibres or filaments can thus be drawn at an appropriate draw ratio. It has indeed been observed that the amount of cellulose carbamate in the dope is advantageously within the range of 8-11 wt-%, as the dry matter content is then high enough for fast coagulation of the fibre.

According to an embodiment, the sodium hydroxide content of the spin bath is maintained within a range of 1.0-1.99 wt-%, preferably 1.5-1.9 wt-%. According to another embodiment, the alkaline spin bath comprises sodium hydroxide and sodium carbonate at a weight ratio of 1:11-1:20. According to yet another embodiment, the sodium carbonate content of the spin bath is maintained within a range of 22-30 wt-%, preferably 23-29 wt-%, in particular 24-28 wt-%. According to a preferred embodiment, the sodium hydroxide content of the spin bath is maintained within a range of 1.0-1.99 wt-% while the sodium carbonate content of the spin bath is maintained within a range of 22-30 wt-%. According to another preferred embodiment, the sodium hydroxide content of the spin bath is maintained within a range of 1.5-1.9 wt-% while the sodium carbonate content of the spin bath is maintained within a range of 23-29 wt-%, or 24-28 wt-%. The portion of alkaline spin bath withdrawn from the spinning unit thus has at least 22 wt-% of sodium carbonate, preferably at least 23 wt-%, in particular at least 24 wt-% of sodium carbonate. The alkaline spin bath thus comprises sodium carbonate in the range of 22-30 wt-%, preferably in the range of 23-29 wt-%, in particular in the range of 24-28 wt-%.

According to a further embodiment, the temperature of the alkaline spin bath is 40-55 °C, preferably 45-50 °C, to accelerate coagulation. These preferred temperatures of the spin bath have been observed to even further speed up the formation of the fibre, while increasing solubility of zinc, even though the sodium hydroxide content of the spin bath is low.

It is indeed essential for the present method that the composition of the spin bath is maintained within the given values for sodium hydroxide and sodium carbonate and temperature. Additionally, preferably any precipitated zinc particles are removed from the spin bath, for example by filtering. Similarly, if any sodium carbonate is crystallised, the crystals are removed. Further, in order to maintain the composition of the coagulation bath constant, carbon dioxide may be flushed into the coagulation bath during the process. Carbon dioxide is reacting with free sodium hydroxide to form sodium carbonate.

Recycling to lower the sodium hydroxide content of the withdrawn portion of the spin bath may comprise the removal of crystals and or precipitates and/or impurities, or this may be performed as a separate step. The sodium hydroxide content of the withdrawn portion of the spin bath is lowered by first partially removing water and crystallisation sodium carbonate, for example vacuum crystallisation combining evaporation and lowering of temperature, and thereafter diluting the concentrated sodium hydroxide, comprising zinc, to a desired degree for re-introduction to the process.

After recycling treatment, at least a portion of the recycled alkaline spin bath is preferably returned to the spinning unit. The sodium hydroxide content of the returned portion is preferably 0.2-1.9 wt-%, i.e. lower than the maximum content of the spin bath. Using a lower sodium hydroxide content is preferred, since preferably sodium hydroxide mainly enters the spin bath in the (cellulose carbamate) spinning dope. Similarly, the sodium carbonate content of the returned portion is preferably lower than 30 wt-%. The recycled alkali recovered from the spin bath may also be used for forming the cellulose carbamate dope, or zinc may be separately removed from the recycled alkaline spin bath.

A portion of the recovered sodium hydroxide, preferably containing a small amount of zinc that has remained in dissolved form, may also be recycled to the cellulose carbamate dissolution. The recycling can thus also comprise separating sodium carbonate from sodium hydroxide. The different components of the spin bath can also be all separated from one another, and re-used in the process, either in the dissolving unit or the spinning unit.

According to an embodiment, after coagulation, the nitrogen content of the cellulose carbamate filament is in the range of 0.40-1.0 wt-%. The cellulose carbamate is thus at least partially hydrolysed before spinning, so that the carbamate in the fibre or filament is on a correct level and/or there is less need to reduce the nitrogen content of the fibre or filament as a post-treatment.

According to an embodiment, the spinning has a spinneret draw ratio in the range of 0.75-1.4, preferably 0.8-1.2. Further, the total stretching after coagulation of the filament or filament tow may at least 70 % by length, preferably greater than or equal to 90 % by length, in particular greater than or equal to 95 % by length or by 70-120 % by length in a stretching unit. The stretching unit is preferably a hot liquid or liquor containing bath. The alkaline liquor containing bath with a pH value over 7 in the stretching unit(s), may for example comprise sodium hydroxide and sodium carbonate at amounts that are kept at levels that are about 2/3 of the amounts in the spin bath.

In the spin bath, cellulose carbamate is coagulated into cellulose carbamate filaments, preferably through one or more spinnerets with multiple holes. Such filaments may be recovered from the spin bath and subjected to stretching, optional cutting into fibres, and optional after-treatment in which the filaments or fibres are washed, bleached and/or decoloured and/or spin finished. The spinnerets may have a hole diameter of 45-60 $\mu$m, preferably 50-55 $\mu$m. The spinneret draw ratio (Dr) in alkaline cellulose carbamate spinning is adjusted by dope composition and the spinning conditions to ensure fast enough cellulose regeneration. The spinning is carried out at a spinneret draw ratio in the range of 0.75-1.5, preferably 0.8-1.2.

For the purposes of embodiments

- draw ratio is the ratio between the take-up roller and the extrusion rate, and
- draw ratio is Dr = v, take up / v, extrusion, where v is velocity, i.e. velocities entering and exiting the spinneret.

$$\text{Spinneret draw ratio (Dr)} = \pi \cdot a \cdot b \cdot \rho \cdot \alpha \cdot \varnothing^2 / (\text{DTEX} \cdot 1 \cdot (1 + \Omega / 100) \cdot 4 \cdot 10^7)$$

in which

| | |
|---|---|
| a | = 1.1150 (1+ fibre moisture-% / (100+fibre moisture-%), fibre moisture-% = expected to be 13.0 % |
| b | = 1.1350 (1+fibre shrinkage-%/100), fibre shrinkage-% = expected to be 13.5 % |
| $\rho$ | = density of the spinning dope at feeding temperature (kg/m$^3$) |
| $\alpha$ | = cellulose carbamate content of the spinning dope (wt-%) |
| $\varnothing$ | = spinneret hole diameter ($\mu$m) |
| DTEX | = linear density of filament (dtex) |
| $\Omega$ | = total godet stretching measured between the first and the last godets (%). |

The primary purpose of drawing of filaments is to produce filaments with a desired strength by inducing sufficient orientation of the polymer molecules along the axial direction. High degree of orientation of cellulose molecules that tends to increase fibre modulus and tenacity. Thus, as fibres are spun into alkaline spin bath, the fibre properties (such as form of the fibres, orientation of the molecules, strength of the fibres, etc.) may be manipulated during coagulation and stretching, depending on the alkalinity, temperature and residence time in each step. Further post-hydrolyse treatment, such as washing and further after-treatment regeneration can affect the nitrogen content of the finished fibres. The tow of cellulose carbamate filament is stretched in the first spin bath or directly after the first spin bath in order to improve the fibres final initial modulus and tenacity. The shape of the fibre may be controlled by adjusting degree of substitution of cellulose carbamate entering spinning and stretching conditions, e.g. roundish oval, bean or lobed fibres may be obtained as a result of controlled spinning and stretching of controlled nitrogen containing cellulose carbamate, creating a smooth surface.

In one embodiment, the dissolved cellulose is subjected to wet spinning while subjecting the filament or filament tow to stretching in the stretching unit. In a particular embodiment, the stretching bath is a hot bath, having a temperature of 75-100 °C, preferably 85 to 95, more preferably about 90 °C. The stretching bath can be the same bath as the spin bath, but typically has a lower concentration of sodium hydroxide and sodium carbonate. For example, if the two baths are in common, the parts are preferably partly divided, and may be operated in counter-current principle. The spin bath and stretching bath are thus both vessels, typically open at their top, while stretching bath(s) are typically covered with lid(s), containing a hot liquid in a given temperature (or a narrow temperature range), and the fibre or filament is passed through the bath, immersed in the liquid, and typically under stretching.

The stretching unit may comprise one or more stretching baths, which typically contain sodium hydroxide and sodium carbonate in amounts that are approximately 2/3 of the amounts in the spin bath. Thus, the amount of sodium hydroxide in the stretching unit is about 0.66-1.32 wt-% and the amount of sodium carbonate less than 20 wt-%, such as 14.5-19.9 wt-%. The optimal salt concentration is maintained in the stretching bath to enhance filament or filament tow formation under the stretching. The amount of sodium hydroxide and sodium carbonate in the (horizontal) stretching bath varies. A part of the more concentrated spin bath composition drifts with the fibre or filament into the stretching bath. Thus, the stretching bath balance is maintained by water and/or circulated salt composition. The amount of sodium hydroxide and sodium carbonate that is returned to the stretching bath needs to be lower than the desired amount of sodium hydroxide and sodium carbonate in the stretching bath circulation. The above-defined amounts are an arithmetic average of the amounts within the stretching bath.

In a suitable embodiment, the filament or filament tows are stretched by at least 70 % by length, preferably greater than or equal to 90 % by length, in particular greater than or equal to 95 % by length or generally 70-120 % by length in a stretching unit, preferably 90-120 % by length, in particular in a hot bath. Stretching by length refers to total godet stretching by adjusting stretching stress of filament or tow of filament between rotating rollers with different circumferential speed e.g. the circumferential speed of the first roller is 25 m/min and the speed of the last roller is 50 m/min, thus the resulting godet stretching is 100 % by length. These high levels of stretching contribute to the provision of a high initial modulus product when the temperature of the stretching bath(s) is 75-100 °C.

Carbamate groups hydrolyse in alkaline baths. Thus, in an embodiment fibre properties may be manipulated during regeneration, especially using conditioned stretching and/or conditioned after-treatment as regeneration of carbamate cellulose takes place during coagulation, stretching and/or after-treatment. When spinning into alkaline coagulation baths, regeneration of the cellulose takes place gradually during coagulation and stretching of the tow, while the aim is that the cellulose regenerates to a sufficient degree already in the beginning of spinning, to allow sufficient stretching.

In one embodiment, nitrogen removal can be continued in the filament formation phase. Spinning parameters and stretching influence orientation of fibres, crystallinity and the final shape of textile fibre, and thus, influence the mechanical properties of the fibre. In a further embodiment nitrogen content of the final product may be adjusted in washing and after treatment stages where most of the remaining carbamate groups may be removed (hydrolysed), particularly in alkaline washing steps. In a preferred embodiment, the nitrogen content of the final product is in the range of 0.10-1.2 wt-%, preferably 0.15-1.0 wt-%, in particular 0.2-0.9 wt-% by dry weight of the fibre. This corresponds to a degree of substitution (DS) range of cellulose 0.012-0.144.

A low nitrogen content in the final product is beneficial if improved wet properties such as low wet elongation and high wet tenacity are desired. In an embodiment, the nitrogen content in the final product is in the range of 0.10-0.75 wt-%, corresponding to a degree of substitution of cellulose of 0.012-0.09.

Stretching under controlled process conditions enables adjustment of cellulose carbamate fibre properties. The shape of the cross-section of the fibre may be modified by stretching under controlled process condition, e.g. roundish/oval, bean or lobed cross-section of fibres may be obtained as a result of controlled stretching, creating a smooth surface, with a cotton like hand and feel.

As an example, the fibre is more homogenous and smooth both on the surface and in the inner structure i.e. cross-section compared to viscose fibres, having an irregular serrated surface. The rounded structures of oval, bean or lobed fibres provide a high initial modulus.

The relative wet strength, i.e. tenacity at break, of the present fibres is improved compared to viscose, which has low wet tenacity at break. Especially a relative wet elongation of the present cellulose carbamate textile fibre is very good. In an embodiment, the cellulose carbamate textile fibre has a wet elongation at break 85-110 % of dry elongation at break in conditioned state, preferably less than 100 %, such as 85-99.9 %, in particular 90-99.9 % (wet/dry relative %) and a wet strength of at least 0.9 cN/dtex, preferably greater than or equal to 1.0 cN/dtex, and relative wet strength of 40-80 % (wet tenacity/dry tenacity), preferably 45-80 %. (relative meaning wet elongation at break/dry elongation at break, compared to a typical wet/dry elongation at break for viscose being about 120 %).

The fibres or filaments may be (at least partly) washed before cutting for reducing total salt content of the filaments or filament tow. The washing unit may comprise one or more washing baths, which typically contain sodium hydroxide and sodium carbonate in amounts that are approximately 1/3 of the amounts in the spin bath, and half of those in the stretching unit. Thus, the amount of sodium hydroxide in the washing unit is about 0.33-0.66 wt-% and the amount of sodium carbonate less than 10 wt-%, such as 7.3-9.9 wt-%.

Sodium hydroxide and/or sodium carbonate, as well as zinc is preferably retrieved also from the solutions of the stretching unit and the washing unit, and recycled to the process. The process thus preferably contains means for monitoring the pH and amounts of components of the various baths, as well as means for withdrawing and returning the solutions to the units.

The present method may optionally comprise one or more of the following process steps: a) acidic washing to remove zinc salt precipitate residues b) water washing c) optional post-hydrolysis of carbamate groups by hot alkaline liquor, d) acidic and/or neutral and/or alkaline bleaching step and/or e) spin finishing. The steps a) and c) can be in either order, with preferably a water washing step in between. The carbamate group is stable in acidic systems and hydrolyses in alkaline baths. One aim of such optional post-treatment may be to reduce the nitrogen content of the filaments to a range of 0.05-0.4 wt-%.

One example of post-hydrolysis is that cellulose carbamate fibres coagulated in alkaline spin bath and stretched in alkaline stretching, having a nitrogen content of 0.8 wt-% were subjected to post-hydrolysis in after-treatment by treating the fibres with post-hydrolysis liquor containing $Na_2CO_3$ and NaOH for 3 min at 95 °C, where after the nitrogen content of the recovered fibre was 0.17 wt-%.

In one embodiment, washing is performed as counter current washing using water or the effluent of a preceding or subsequent processing step. In a preferred embodiment, the after-treatment unit is operated on a counter current principle.

Zinc and its compounds, which are transferred from the dope to the spin bath and further, can be finally dissolved out from the fibres during post-treatment. Zinc carbonate is a slightly soluble in the spin bath and washing liquids, and thus it may partially precipitate in the spin bath, and in major party, transfers with the filaments to the stretching bath and the washing liquids, wherein it also partially precipitates. Some zinc can remain in the filaments also until the optional post-treatment step(s). If part of the zinc still remains in the fibres or filaments after washing, an acid washing can be used for example for removing zinc from stable fibres by dissolving in a suitable acidic liquor.

Finally, the obtained filaments or fibres are dried, by any known drying method.

It has also been surprisingly found that the presence of the cellulose carbamate textile described herein above can be determined by fluorescence detection. Thus, embodiments provide a method of determining the presence of cellulose carbamate fibres or an article containing such fibres.

In an embodiment, the method comprises subjecting the article to UV light, preferably at 365 nm and detecting fluorescence at a wavelength in the range of 400 to 520 nm caused by said cellulose carbamate fibres. In one embodiment, the article is a yarn, tow of filaments, staple fibres, shortcut fibres or flock. In a further embodiment, the article is a textile garment containing such fibres, such as bleached and/or coloured articles. Pursuant to the foregoing, in an embodiment, if cellulose carbamate has been mixed with viscose, lyocell or modal in fibres, filaments, yarn or fabric, the presence of cellulose carbamate in the man-made cellulose carbamate fibre mixtures can be detected by fluorescence because other regenerated fibres are not fluorescent.

Fluorescence is the emission of light by a substance that has absorbed light or other electromagnetic radiation. The cellulose carbamate textile fibre according to an embodiment exhibits fluorescence. Typically, emitting light by fluorescent material has a longer wavelength. The cellulose carbamate textile fibre according to an embodiment emits blue/turquoise light, e.g. at a wavelength in the range of 450-490 nm, which may be observed visually when said fibre is exposed to UV-light, particularly UV-light at a wavelength of 365 nm. The fluorescence emission wavelength depends on the excitation wavelength. The fibre according to an embodiment exhibits fluorescence at a wavelength in the range of 420 to 520 nm (blue) when excited with UV-light, particularly at 365 nm and exhibits fluorescence at a wavelength in the range of 600 to 750 nm (red) when excited at 546 nm.

Further embodiments relate to a cellulose carbamate textile fibre obtainable by embodiments of the method, uses of the fibre obtainable by embodiments of the method and uses of the cellulose carbamate textile fibre. Thus, one embodiment provides a cellulose carbamate textile fibre obtainable by embodiments of the method described herein above. In an embodiment, the fibre has a content of p-terephthalate and/or p-terephthalic acid and/or unhydrolysed or partly unhydrolysed polyester, in particular polyethylene terephthalate, of 0.00005-0.5 wt-%, determined by gas chromatography-mass spectrometry as explained in more detail below in the Examples. The amount can be for example less than 0.2 % by weight, preferably less than 0.1 % by weight. The presence of p-terephthalate and/or p-terephthalic acid and/or unhydrolysed or partly unhydrolysed polyester indicates that textile waste material has been used as raw material in the manufacturing of the cellulose carbamate.

According to yet another embodiment, the fibre has a linear density of 0.8-1.8 dtex, a tenacity of 2.0-2.9 cN/dtex, and an initial modulus of 50-120 cN/dtex. In a preferred embodiment, the linear density is 1.1-1.5 dtex, the tenacity 2.1-2.8 cN/dtex, and the initial modulus 70-120 cN/dtex. The measurement methods are as described above. Fibres having a dtex at the lower end of the range such as 0.8 to 1.3 are suitable for providing e.g. lightweight textiles typically from fibres having a titer of about 1.5 or less. Cotton fibres typically have a tenacity at the higher end of the range and above, while the conventional wet spun man-made cellulose carbamate fibres typically have a tenacity at the lower end of the range. The cN/dtex value of the man-made cellulose carbamate textile fibre according to embodiments is measured in the dry state, *i.e.* in the conditioned state. The initial modulus value range of 50-120 cN/dtex is higher than for conventional man-made viscose, which typically has a modulus, measured in the dry state e.g. in the range of 20-40 cN/dtex.

In a further embodiment the cellulose carbamate textile fibre of any of the above described embodiments is used in a yarn, a textile, a woven fabric, a knitted fabric, a textile garment or a non-woven article, such as weave tow, flock, filament yarn or tow of filaments.

Further embodiments relate to articles comprising the cellulose carbamate textile fibre described hereinabove. In one embodiment, a yarn comprises the cellulose carbamate textile fibre as described above. In a further embodiment, a textile garment comprises the cellulose carbamate textile fibre as described above. In a particular embodiment, a woven or knitted fabric comprises the cellulose carbamate textile fibre as described above. In a suitable embodiment a non-woven article, comprises the cellulose carbamate textile fibre as described above. In further embodiments, the cellulose carbamate fibres in the yarn, the textile or the woven fabric are combined with cotton fibres, in particular with virgin cotton fibres. Thus, by means of embodiments it is possible to replace at least a portion of cotton fibres, particularly virgin cotton fibres with manmade cellulose carbamate fibres there by reducing the impact of *e.g.* the textile industry on the environment. The manmade cellulose carbamate fibres of embodiments of the present invention have a similar initial modulus to cotton fibres, which allows for the replacement of cotton with the said manmade fibres.

DETAILED DESCRIPTION OF THE DRAWINGS

Figure 1 schematically illustrates a method according to an embodiment. Cellulose carbamate 1 is fed to a dissolving unit 2. In this embodiment, the amount of cellulose carbamate is 8-11 wt-%, sodium hydroxide 5-7 wt-% and zinc 0.16-1.2 wt-%, the rest being water. From the dissolving unit the dissolved cellulose carbamate in the form of cellulose carbamate spinning dope is directed to a spin bath 3 by extruding via spinneret(s). In the spin bath, the amount of sodium hydroxide is maintained within a range of 1.0-1.99 wt-%, and the amount of sodium carbonate ($Na_2CO_3$) within a range of 22-30 wt-%. The spun filaments or fibres are then passed to one or more stretching units 4. In the stretching unit(s), the amounts of sodium hydroxide and sodium carbonate are kept at levels that are about 2/3 of the amounts in the spin bath. The stretching unit may comprise either one unit or several units, and in case of several units, they can be either completely separate or partly in connection with one another.

After stretching, the fibres or filaments are washed in a washing unit 5, wherein the amounts of sodium hydroxide and sodium carbonate are kept at levels that are about 1/3 of the amounts in the spin bath. After washing, the fibres or filaments are cut in a cutting unit 6 and optionally post-treated in one or more post-treatment units 7, 8, 9 and 10. A first optional post-treatment unit 7 is an alkaline washing unit, where nitrogen is hydrolysed. A second post-treatment unit 8 is a washing unit where the cut fibres or filaments are washed with water. A third optional post-treatment unit 9 is an acid washing unit, which has the aim to dissolve zinc using sulphuric acid. The alkaline washing unit may comprise $Na_2CO_3$ and NaOH. A fourth optional post-treatment unit 10 is an alkaline bleaching step, using hydrogen peroxide. A fifth post-treatment unit 11 is a spin finishing unit. Typically, the post-treatment units 8 and 11 are always used, while the post-treatment units 7, 9 and 10 are more optional, and may depend for example on the upstream process condition and/or the intended use of the material. After drying in a drying unit 12, cellulose carbamate fibres 13 are recovered.

The Figure further shows some recycling paths of the process. Indeed, both sodium hydroxide and sodium carbonate (both indicated with reference number 17) are directed from the spin bath 3 to separation unit(s) 14 and back to the spin bath as needed. Similarly, sodium hydroxide and sodium carbonate (both indicated with reference number 18) are withdrawn from the stretching unit(s) 4 and directed to the separation unit(s) 14. These compounds can also be withdrawn from the other units downstream the stretching unit(s), as need be, but the need is believed to be significantly lower.

The separation unit(s) are also capable of separating zinc 16 from its incoming flows, and to recycle it back to the dissolving unit 2. Further, sodium hydroxide and/or sodium carbonate may be directed to pre-treatment units 15, or to carbamation, if need be.

EXAMPLES

**Example 1. Chemical pre-treatment and carbamation**

Recycled mixed colour sorted cotton textile waste, polycotton feedstock, with CED viscosity of 800 ml/g (ISO 5351:2010) containing 4.0 wt-% of non- fibres (mainly polyester, but also traces of nylon, isoprene containing material (elastic band), polyethylene/polypropylene) were mechanically shredded to disintegrate the fabric structure to form of pieces having fibres having a fibre length of average 6 mm. The shredded material was chemically pre-treated using the two-stage cooking procedure and bleaching/decolourisation: in the first acidic stage material was treated with sulphuric acid. In the second alkaline stage the washed acid treated material was chemically treated with sodium hydroxide to hydrolyse majority of polyester.

In the first acidic stage, the shredded material was treated with sulphuric acid at 95 degrees Celsius for 60 min. Textile waste consistency was 10 wt-% and the initial acid charge was 5.0 g/l. The medium consistency pulp was treated in continuous plug flow reactor. The pH value of the final washing liquid was 3.2 measured in wash filtrate corresponding 0.6 g of free sulphuric acid per kilogram of dry acid treated material. The viscosity of the acid treated material was 294 ml/g (based on the CED viscosity measurement according to ISO 5351:2010).

In a second, alkaline stage the washed, acid treated material was chemically treated in a pressure reactor equipped with a medium consistency pump with sodium hydroxide at 110 °C for 120 min. Textile waste consistency was 8.3 wt-% and initial alkali charge was 72 g/l. pH value of the final washing liquid was 10.0. The viscosity of the chemically pre-treated material was 290 ml/g (based on the CED viscosity measurement according to ISO 5351:2010). Average yield through alkaline stage was 92 wt-% solids on oven dried material.

In the decolourisation stage, including both ozone and alkaline hydrogen peroxide treatment stages, the polymerisation degree was further adjusted. Ozone treatment in the alkaline range does not significantly reduce CED viscosity of the material; in particular the loss in viscosity is smaller than that which obtained with ozone in acidic conditions. Thus, a narrow polydispersity index obtained in preceding process stages is maintained in alkaline decolourisation phase. The material obtained from decolourisation process was suitably dewatered in press and with an air flow, for the subsequent carbamation process.

Ozone decolourisation was performed using a medium consistency loop and pressure reactor. The loop was first filled with warm softened water and the shredded textile (300 kg, bone dry) was emptied to the system. Next, the raw material and water slurry was fed to a pressure reactor. NaOH, 20 kg/BDT (bone dry metric ton of the raw material) was fed to the reactor and a textile waste consistency of 8.5 wt-% with pH 11.8 was obtained. The pre-treated textile-water slurry was heated to 70 °C. The estimated ozone concentration fed to the reaction was 16 wt-% and the time for the feeding was 150 minutes. Total ozone charge was 4.0 kg /BDT. After the ozone stage the slurry was cooled by adding 4.0 $m^3$ water. Cooled and diluted slurry was dewatered in a screw press. The pH of the filtrate was 10.0. The viscosity of the ozone decolourised material was 279 ml/g (ISO 5351:2010).

Next, a peroxide stage was performed on the ozone decolourised textile material. The ozone treated material was pumped to the reactor and a consistency of the slurry in the pressure reactor was 8.0 wt-%. The reaction mixture was heated to a reaction temperature of 80 °C and pH was adjusted with NaOH to 11.6. The reaction time in the peroxide stage was 60 minutes and hydrogen peroxide charge was 5 kg/BDT. The decolourised material was washed thorough with screw press. Consistency in the screw press feed was 2.2 wt-% and thickening factor was 21 in the first washing sequence. In the second wash sequence, the thickening factor was 25. The viscosity of the decolourised pulp obtained was 265 ml/g (ISO 5351:2010).

The carbamation process was carried out as described in Finnish patents FI 112869, FI 112795, and in international patent application publication WO 2021/038136 A. In the carbamation stage the degree of polymerisation of the cellulose and polydispersity of the final product were optimised by chemicals, time, grinding and temperature. After the carbamation of the decolourised sample (described above) the viscosity of the cellulose carbamate obtained was 210 ml/g (ISO 5351:2010) corresponding to DP of 268 and PD of 3.28.

**Example 2. Wet spinning of cellulose carbamate dope in an alkaline spin bath**

The cellulose carbamate obtained in Example 1 (Samples 1 to 5 and Comparative samples 1 and 2) from carbamation process was further dissolved for production of cellulose carbamate fibres by the wet spinning process: the ground air dry cellulose carbamate powder was slurried and dissolved in 6.5 wt % sodium hydroxide and 1.2 wt-% sodium zincate (zinc oxane) solution. Target cellulose carbamate content in the dope was between 7.3 and 8.5 wt -%. Sample 6 was prepared from cellulose carbamate obtained using similar production process. The viscosity of the cellulose carbamate used for Sample 6 was 195 ml/g (ISO 5351:2010) corresponding to degree of polymerisation (DP) of 247 and polydispersity (PD) of 3.41. The cellulose carbamate dopes obtained from the dissolving process was subsequently filtered using the two-stage backflush filtering process using the 20 μm filter media in the second filtration stage.

Wet spinning of the filtered and deaerated cellulose carbamate dopes were carried out using the alkaline spin bath optimised for cellulose carbamate process, containing 22.1-27.6 wt-% of sodium carbonate and 1.2-2.8 wt-% of sodium hydroxide. The cellulose dope was coagulated in a spin bath (temperature 45 °C) and the applied total godet stretching stress was 60-115 % under hot bath (temperature 90 °C). The filament tow obtained from spinning was cut into staple fibres with cut length of 40 mm. Linear density of the fibres (dtex), fibre tenacity (cN/dtex), elongation (%) and initial modulus (cN/dtex) of the fibres were measured according to ISO 1973:2021 and ISO 5079:2020. The dried fibres were conditioned at a relative humidity of 65 ± 2 % and temperature of 20 ± 2 °C for at least 24 h. The test speed was 20 mm/min and gauge length 20 mm, an average of 20 measurements (Favigraph, Textechno). Dope characteristics, spinning conditions, stretching conditions and measured stable fibre properties are summarised in Table 1, where NR stands for no result.

Table 1

| Sample | Dope CCA (wt-%) | Dope viscosity (Pas) | Spin bath NaOH (wt-%) | Spin bath Na$_2$CO$_3$ (wt-%) | Stretching (%) | Draw ratio | Linear density (dtex) | Elongation at break (%) | Tenacity (cN/dtex) | Initial modulus (cN/dtex) |
|---|---|---|---|---|---|---|---|---|---|---|
| Sample 1 | 8.5 | 13.0 | 1.2 | 27.6 | 106 | 1.01 | 1.14 | 6.5 | 2.3 | 116.1 |
| Sample 2 | 8.5 | 13.0 | 1.3 | 23.5 | 106 | 0.87 | 1.32 | 7.1 | 2.3 | 119.8 |
| Sample 3 | 8.5 | 13.0 | 1.3 | 22.1 | 91 | 1.11 | 1.11 | 7.0 | 2.2 | 116.6 |
| Sample 4 | 8.5 | 13.0 | 1.7 | 25.8 | 115 | 0.93 | 1.20 | 7.2 | 2.4 | 117.1 |
| Sample 5 | 8.2 | 9.5 | 1.4 | 26.0 | 115 | 0.90 | 1.21 | 9.2 | 2.3 | 114.1 |
| Sample 6 | 8.4 | 6.1 | 1.4 | 26.9 | 105 | 0.95 | 1.20 | 9.5 | 2.3 | 100.6 |
| Comparative sample 1 | 7.3 | 5.3 | 2.8 | 23.4 | 60 | 0.87 | NR | NR | NR | NR |
| Comparative sample 2 | 7.6 | 6.6 | 2.5 | 23.6 | 86 | 0.86 | 1.29 | 7.1 | < 2.0 | 76.1 |

**Example 3. Recycling of alkaline spin bath**

A spin bath in equilibrium state, 9121/h was withdrawn from the spinning unit, contained 1.69 wt-% of sodium hydroxide, 22.1 wt-% of sodium carbonate and 0.13 wt-% of zinc. A spinning dope, 40 1/h, containing 8.5 wt-% of cellulose carbamate, 6.5 wt-% of sodium hydroxide and 0.62 wt-% of zinc was continuously extruded into the spinning bath and a fibre filament was formed and recovered. A major part, 762 1/h, of the used spin bath containing sodium hydroxide sodium carbonate and zinc in the above amounts was circulated back to the spinning unit without recovery or manipulation. The rest of the solution withdrawn from the spinning unit for recycling to lower the sodium hydroxide content in the spin bath. 1381/h of the recycled spin bath was returned into the spinning unit. The returned portion of the recycled alkaline spin bath contained 0.43 wt-% of sodium hydroxide and 28.1 wt-% of sodium carbonate. A major part of the recycled sodium hydroxide was recycled with recycled soluble zinc compounds back to cellulose carbamate dissolution stage to form the spinning dope.

**Example 4. Determination of terephthalic acid content**

A content of terephthalic acid in cellulose carbamate fibre produced as described in Example 1 was measured by GC/MS (gas chromatography-mass spectrometry) system. The sample was acidified by hydrochloric acid, pH < 3, and dried in oven overnight. Free terephthalic acid was extracted from the sample by pyridine/methanol solvent and concentrated into 5 ml. The extracted terephthalic acid was methylated and analysed by GC/MS. The free terephthalic acid content is the sample was calculated against external calibration standard. The amount of terephthalic acid was 10 mg/kg (of dry cellulose carbamate fibre).

**Example 5. Determination of terephthalic acid content**

A content of terephthalic acid in cellulose carbamate fibre produced as described in Example 2 (cut length 40 mm) was measured by GC/MS (gas chromatography-mass spectrometry system. The sample was first refluxed in sodium hydroxide (10 wt-%) for 4 hours to hydrolyse polyethylene terephthalate in the sample. Terephthalic acid was extracted from the sample, dissolved in pyridine/methanol solvent and concentrated into 5 ml. The extracted terephthalic acid was methylated and analysed by GC/MS. Terephthalic acid content was calculated against external calibration standard. The amount of terephthalic acid was 85 mg/kg (of dry cellulose carbamate fibre).

The verbs "to comprise" and "to include" are used in this document as open-ended terms that neither exclude nor require the presence of unrecited features. Furthermore, it is to be understood that the use of "a" or "an," i.e., the singular form, throughout this document does not exclude a plurality.

**Claims**

1. A method for the manufacture of cellulose carbamate textile fibre, comprising the steps of

- dissolving cellulose carbamate having a maximum nitrogen content, as measured according to SFS 5505:1988, of 2.5 wt-% in an aqueous sodium hydroxide medium to form a cellulose carbamate dope, wherein the dope comprises zinc;
- spinning the cellulose carbamate dope into an alkaline aqueous spin bath in a spinning unit, to form filaments or filament tow, wherein a temperature of the alkaline aqueous spin bath is in the range of 35-60 °C; and
- stretching the filaments or filament tow to obtain cellulose carbamate fibres;

wherein a sodium hydroxide content of the spin bath is maintained within a range of 1.0-1.99 wt-% and a sodium carbonate content of the spin bath is maintained at at most 30 wt-%, by withdrawing a portion of the alkaline spin bath from the spinning unit for recycling.

2. The method according to claim 1, wherein the cellulose carbamate comprises cellulose carbamate obtained from cellulose containing waste material, the waste material being preferably selected from a group consisting of textile waste, paper waste, cardboard waste, agro waste and mixtures thereof, preferably in an amount of at least 25 wt-% of the cellulose carbamate, preferably at least 50 wt-% of the cellulose carbamate.

3. The method according to claim 1 or 2, wherein the cellulose carbamate comprises cellulose carbamate obtained from textile waste, in an amount of at least 50 wt-% of the cellulose carbamate, preferably at least 90 wt-% of the cellulose carbamate.

4.  The method according to any of the preceding claims, wherein the nitrogen content of the cellulose carbamate is 0.5-2.0 wt-%, preferably 0.8 to 1.5 wt-%.

5.  The method according to any of the preceding claims, wherein the cellulose carbamate has a polydispersity in the range of 2.0 to 5.0, preferably 2.0-4.0, more preferably 2.0-3.5 as measured by Gel Permeation Chromatography/Size Exclusion Chromatography instrument, and an average intrinsic viscosity of 147 to 225 ml/g, preferably 161 to 197 ml/g, as measured by CED viscosity measurement according to ISO 5351:2010.

6.  The method according to any of the preceding claims, wherein the cellulose carbamate is prepared by pre-treating cellulose-based material, and performing cellulose carbamation on the pre-treated cellulose-based material.

7.  The method according to claim 6, wherein the pre-treatment comprises a mechanical treatment to obtain a predetermined particle size of the cellulose-based material, followed by an acidic treatment and an alkaline treatment in a cooking liquor, and optionally a bleaching and/or decolourisation treatment.

8.  The method according to any of the preceding claims, wherein the cellulose carbamate dope comprises 8-11 wt-%, preferably 8.5-10 wt-%, of cellulose carbamate, 5-8 wt-% of sodium hydroxide and 0.08-1.2 wt-% of zinc, and the dope has a viscosity 15 Pas or less , measured at 20 degrees Celsius, suitably in the range of 4-15 Pas, as measured by ASTM D1343-93:2019.

9.  The method according to any of the preceding claims, wherein the sodium hydroxide content of the spin bath is maintained within a range of 1.0-1.99 wt-%, preferably 1.5-1.9 wt-%.

10. The method according to any of the preceding claims, wherein the alkaline spin bath comprises sodium hydroxide and sodium carbonate at a weight ratio of 1:11-1:20.

11. The method according to any of the preceding claims, wherein the sodium carbonate content of the spin bath is maintained within a range of 22-30 wt-%, preferably 23-29 wt-%, in particular 24-28 wt-%.

12. The method according to any of the preceding claims, wherein the temperature of the alkaline spin bath is in the range of 40-55, preferably 45-50 °C.

13. The method according to any of the preceding claims, wherein the spinning has a spinneret draw ratio in the range of 0.75-1.4, preferably 0.8-1.2.

14. The method according to any of the preceding claims, wherein the total stretching after coagulation of the filament or filament tow is at least 70 % by length, preferably greater than or equal to 90 % by length, in particular greater than or equal to 95 % by length or by 70-120 % by length in a stretching unit, in particular in a hot bath.

15. The method according to any of the preceding claims, further comprising at least one post-treatment step selected from an acid treatment to remove zinc oxide residues from the filaments and a post-hydrolyse treatment to reduce the nitrogen content of the filaments to a range of 0.05-0.4 wt-%.

16. The method according to any of the preceding claims, wherein the nitrogen content of the cellulose carbamate filament after coagulation is in the range of 0.40-1.0 wt-%.

17. A cellulose carbamate textile fibre having a linear density of 0.8-1.8 dtex measured according to ISO 1973:2021, and a tenacity of 2.0-2.9 cN/dtex measured according to ISO 5079:2020.

18. The cellulose carbamate textile fibre according to claim 17, having a content of p-terephthalate and/or p-terephthalic acid and/or unhydrolysed or partly unhydrolysed polyester of 0.00005-0.5 wt-%, determined by gas chromatography-mass spectrometry.

19. The cellulose carbamate textile fibre according to claim 17 or 18, having an initial modulus of 50-120 cN/dtex measured according to ISO 5079:2020, preferably a linear density of 1.1-1.5 dtex, a tenacity of 2.1-2.8 cN/dtex, and an initial modulus of 70-120 cN/dtex.

20. Use of cellulose carbamate textile fibre having a linear density of 0.8-1.8 dtex and a tenacity of 2.0-2.9 cN/dtex in yarn, textile, woven or knitted fabric, a textile garment or non-woven.

21. A yarn, textile, woven or knitted fabric, a textile garment or non-woven article, comprising the cellulose carbamate textile fibre having a linear density of 0.8-1.8 dtex and a tenacity of 2.0-2.9 cN/dtex.

**Patentansprüche**

1. Verfahren zur Herstellung von Cellulosecarbamat-Textilfasern, umfassend die folgenden Schritte

   - Auflösen von Cellulosecarbamat, das einen maximalen Stickstoffgehalt, gemessen gemäß SFS 5505:1988, von 2,5 Gew.-% in einem wässrigen Natriumhydroxidmedium aufweist, um ein Cellulosecarbamat-Dope zu bilden, wobei das Dope Zink umfasst;
   - Spinnen des Cellulosecarbamat-Dopes in ein alkalisch-wässriges Spinnbad in einer Spinneinheit, um Filamente oder Filamentfaserbündel zu bilden, wobei eine Temperatur des alkalisch-wässrigen Spinnbads im Bereich von 35-60 °C liegt; und
   - Strecken der Filamente oder des Filamentfaserbündels, um Cellulosecarbamatfasern zu erhalten; wobei ein Natriumhydroxidgehalt des Spinnbades im Bereich von 1,0-1,99 Gew.-% gehalten wird und ein Natriumcarbonatgehalt des Spinnbades bei höchstens 30 Gew.-% gehalten wird, indem ein Teil des alkalischen Spinnbads aus der Spinneinheit zur Wiederverwertung entzogen wird.

2. Verfahren nach Anspruch 1, wobei das Cellulosecarbamat aus cellulosehaltigem Abfallmaterial erhaltenes Cellulosecarbamat umfasst, wobei das Abfallmaterial vorzugsweise ausgewählt ist aus einer Gruppe bestehend aus Textilabfällen, Papierabfällen, Kartonabfällen, Agrarabfällen und Mischungen davon, vorzugsweise in einer Menge von mindestens 25 Gew.-% des Cellulosecarbamats, vorzugsweise mindestens 50 Gew.-% des Cellulosecarbamats.

3. Verfahren nach Anspruch 1 oder 2, wobei das Cellulosecarbamat aus Textilabfällen erhaltenes Cellulosecarbamat in einer Menge von mindestens 50 Gew.-%, vorzugsweise mindestens 90 Gew.-%, umfasst.

4. Verfahren nach einem der vorstehenden Ansprüche, wobei der Stickstoffgehalt des Cellulosecarbamats 0,5-2,0 Gew.-%, vorzugsweise 0,8 bis 1,5 Gew.-% beträgt.

5. Verfahren nach einem der vorstehenden Ansprüche, wobei das Cellulosecarbamat eine Polydispersität im Bereich von 2,0 bis 5,0, vorzugsweise 2,0-4,0, besonders vorzugsweise 2,0-3,5, gemessen durch ein Gel-Permeation-Chromatography/Size-Exclusion-Chromatography-Instrument, und eine mittlere intrinsische Viskosität von 147 bis 225 ml/g, vorzugsweise 161 bis 197 ml/g, gemessen durch CED-Viskositätsmessung gemäß ISO 5351:2010, aufweist.

6. Verfahren nach einem der vorstehenden Ansprüche, wobei das Cellulosecarbamat durch Vorbehandeln von auf Cellulose basierendem Material und Durchführen von Cellulosekarbonisierung des vorbehandelten auf Cellulose basierenden Materials vorbereitet wird.

7. Verfahren nach Anspruch 6, wobei die Vorbehandlung eine mechanische Behandlung umfasst, um eine vorbestimmte Partikelgröße des auf Cellulose basierenden Materials zu erhalten, gefolgt von einer sauren Behandlung und einer alkalischen Behandlung in einer Kochlauge und optional einer Bleich- und/oder Entfärbungsbehandlung.

8. Verfahren nach einem der vorstehenden Ansprüche, wobei das Cellulosecarbamatl-Dope 8-11 Gew.-%, vorzugsweise 8,5-10 Gew.-% Cellulosecarbamat, 5-8 Gew.-% Natriumhydroxid und 0,08-1,2 Gew.-% Zink umfasst und eine Viskosität von 15 Pas oder weniger, gemessen bei 20 °C, geeigneterweise im Bereich von 4-15 Pas gemäß ASTM D1343-93:2019 aufweist.

9. Verfahren nach einem der vorstehenden Ansprüche, wobei der Natriumhydroxidgehalt des Spinnbades in einem Bereich von 1,0-1,99 Gew.-%, vorzugsweise 1,5-1,9 Gew.-% gehalten wird.

10. Verfahren nach einem der vorstehenden Ansprüche, wobei das alkalische Spinnbad Natriumhydroxid und Natriumcarbonat in einem Gewichtsverhältnis von 1:11-1:20 umfasst.

11. Verfahren nach einem der vorstehenden Ansprüche, wobei der Natriumcarbonatgehalt des Spinnbades in einem Bereich von 22-30. Gew.-%, vorzugsweise 23-29 Gew.-%, insbesondere 24-28 Gew.-% gehalten wird.

12. Verfahren nach einem der vorstehenden Ansprüche, wobei die Temperatur des alkalischen Spinnbades im Bereich von 40-55, vorzugsweise 45-50 °C liegt.

13. Verfahren nach einem der vorstehenden Ansprüche, wobei das Spinnen ein Spinndüsenstreckverhältnis im Bereich von 0,75 bis 1,4, vorzugsweise 0,8 bis 1,2, aufweist.

14. Verfahren nach einem der vorstehenden Ansprüche, wobei die Gesamtverstreckung nach Koagulation des Filaments oder des Filamentfaserbündels mindestens 70 % in Länge, vorzugsweise größer oder gleich 90 % in Länge, insbesondere größer oder gleich 95 % in Länge oder um 70-120% in Länge in einer Verstreckungseinheit, insbesondere in einem heißen Bad beträgt.

15. Verfahren nach einem der vorstehenden Ansprüche, weiter umfassend mindestens einen Nachbehandlungsschritt, ausgewählt aus einer Säurebehandlung zum Entfernen von Zinkoxidrückständen aus den Filamenten und einer Nachhydrolysebehandlung zum Reduzieren des Stickstoffgehalts der Filamente auf einen Bereich von 0,05-0,4 Gew.-%.

16. Verfahren nach einem der vorstehenden Ansprüche, wobei der Stickstoffgehalt des Cellulosecarbamatfilaments nach Koagulation im Bereich von 0,40-1,0 Gew.-% liegt.

17. Cellulosecarbamat-Textilfaser, die eine lineare Dichte von 0,8-1,8 dtex, gemessen gemäß ISO 1973:2021, und eine Reißfestigkeit von 2 0-2 9 cN/dtex, gemessen gemäß ISO 5079:2020, aufweist.

18. Cellulosecarbamat-Textilfaser nach Anspruch 17, die einen Gehalt an p-Terephthalat und/oder p-Terephthalsäure und/oder unhydrolysiertem oder teilweise unhydrolysiertem Polyester von 0,00005-0,5 Gew.-%, bestimmt durch Gaschromatographie-Massenspektrometrie, aufweist.

19. Cellulosecarbamat-Textilfaser nach Anspruch 17 oder 18, die ein Anfangsmodul von 50-120 cN/dtex, gemessen gemäß ISO 5079:2020, vorzugsweise eine lineare Dichte von 1,1-1,5 dtex, eine Reißfestigkeit von 2,1-2,8 cN/dtex und ein Anfangsmodul von 70-120 cN/dtex aufweist.

20. Verwendung von Cellulosecarbamat-Textilfaser, die eine lineare Dichte von 0,8-1,8 dtex und eine Reißfestigkeit von 2,0-2,9 cN/dtex aufweist, in Garn, Textilie, gewebtem oder gestricktem Stoff, einem textilen Kleidungsstück oder Vliesstoff.

21. Garn, Textil, gewebter oder gestrickter Stoff, Textilkleidungsstück oder Vliesartikel, umfassend Cellulosecarbamat-Textilfaser, die eine lineare Dichte von 0,8-1,8 dtex und eine Reißfestigkeit von 2,0-2,9 cN/dtex aufweist.

**Revendications**

1. Procédé de fabrication d'une fibre textile en carbamate de cellulose, comprenant les étapes de :

   - dissolution de carbamate de cellulose présentant une teneur maximale en azote, telle que mesurée selon SFS 5505:1988, de 2,5 % en poids dans un milieu aqueux d'hydroxyde de sodium pour former une solution à filer de carbamate de cellulose, dans lequel la solution à filer comprend du zinc ;
   - filage de la solution à filer de carbamate de cellulose dans un bain de filage aqueux alcalin dans une unité de filage, pour former des filaments ou un câble de filaments, dans lequel la température du bain de filage aqueux alcalin est dans la plage de 35-60 °C ; et
   - étirage des filaments ou du câble de filaments pour obtenir des fibres de carbamate de cellulose ; dans lequel une teneur en hydroxyde de sodium du bain de filage est maintenue dans une plage de 1,0-1,99 % en poids et une teneur en carbonate de sodium du bain de filage est maintenue à au plus 30 % en poids, en prélevant une partie du bain de filage alcalin de l'unité de filage pour recyclage.

2. Procédé selon la revendication 1, dans lequel le carbamate de cellulose comprend du carbamate de cellulose obtenu à partir de déchets contenant de la cellulose, les déchets étant, de préférence, choisis dans un groupe constitué par des déchets textiles, des déchets de papier, des déchets de carton, des déchets agricoles et des mélanges de ceux-ci, de préférence en une quantité d'au moins 25 % en poids de carbamate de cellulose, de préférence d'au moins 50 % en poids de carbamate de cellulose.

3. Procédé selon la revendication 1 ou 2, dans lequel le carbamate de cellulose comprend du carbamate de cellulose obtenu à partir de déchets textiles, en une quantité d'au moins 50 % en poids du carbamate de cellulose, de préférence d'au moins 90 % en poids du carbamate de cellulose.

4. Procédé selon l'une quelconque des revendications précédentes, dans lequel la teneur en azote du carbamate de cellulose est 0,5-2,0 % en poids, de préférence de 0,8 à 1,5 % en poids.

5. Procédé selon l'une quelconque des revendications précédentes, dans lequel le carbamate de cellulose présente une polydispersité dans la plage de 2,0 à 5,0, de préférence 2,0-4,0, plus préférentiellement 2,0-3,5, telle que mesurée par un instrument de chromatographie par perméation de gel/chromatographie d'exclusion de taille et une viscosité intrinsèque moyenne de 147 à 225 ml/g, de préférence de 161 à 197 ml/g, telle que mesurée par une viscosimétrie CED selon la norme ISO 5351:2010.

6. Procédé selon l'une quelconque des revendications précédentes, dans lequel le carbamate de cellulose est préparé en prétraitant un matériau à base de cellulose, et en effectuant une carbamation de cellulose sur le matériau à base de cellulose prétraité.

7. Procédé selon la revendication 6, dans lequel le prétraitement comprend un traitement mécanique pour obtenir une granulométrie prédéterminée du matériau à base de cellulose, suivi d'un traitement acide et d'un traitement alcalin dans un bain de cuisson, et, facultativement, d'un blanchiment et/ou d'un traitement de décoloration.

8. Procédé selon l'une quelconque des revendications précédentes, dans lequel la solution à filer de carbamate de cellulose comprend 8-11 % en poids, de préférence 8,5-10 % en poids, de carbamate de cellulose, 5-8 % en poids d'hydroxyde de sodium et 0,08-1,2 % en poids de zinc, et la solution à filer présente une viscosité de 15 Pa·s ou moins, mesurée à 20 degrés Celsius, de manière appropriée dans la plage de 4-15 Pa·s, telle que mesurée par la norme ASTM D1343-93:2019.

9. Procédé selon l'une quelconque des revendications précédentes, dans lequel la teneur en hydroxyde de sodium du bain de filage est maintenue dans une plage de 1,0-1,99 % en poids, de préférence 1,5-1,9 % en poids.

10. Procédé selon l'une quelconque des revendications précédentes, dans lequel le bain de filage alcalin comprend de l'hydroxyde de sodium et du carbonate de sodium à un rapport pondéral de 1:11-1:20.

11. Procédé selon l'une quelconque des revendications précédentes, dans lequel la teneur en carbonate de sodium du bain de filage est maintenue dans une plage de 22-30 % en poids, de préférence 23-29 % en poids, en particulier 24-28 % en poids.

12. Procédé selon l'une quelconque des revendications précédentes, dans lequel la température du bain de filage alcalin est dans la plage de 40-55, de préférence entre 45-50 °C.

13. Le procédé selon l'une quelconque des revendications précédentes, dans lequel le filage présente un rapport d'étirage de la filière dans la plage de 0,75-1,4, de préférence 0,8-1,2.

14. Procédé selon l'une quelconque des revendications précédentes, dans lequel l'étirage total après coagulation du filament ou du câble de filaments est au moins 70 % par longueur, de préférence supérieur ou égal à 90 % par longueur, en particulier supérieur ou égal à 95 % par longueur ou par 70-120 % par longueur dans une unité d'étirage, en particulier dans un bain chaud.

15. Procédé selon l'une quelconque des revendications précédentes, comprenant en outre au moins une étape de post-traitement choisie parmi un traitement acide pour éliminer des résidus d'oxyde de zinc des filaments et un traitement de post-hydrolyse pour réduire la teneur en azote des filaments à une plage de 0,05-0,4 % en poids.

16. Procédé selon l'une quelconque des revendications précédentes, dans lequel la teneur en azote du filament de carbamate de cellulose après coagulation est dans la plage de 0,40-1,0 % en poids.

**17.** Fibre textile en carbamate de cellulose présentant une densité linéaire de 0,8-1,8 dtex mesurée selon la norme ISO 1973:2021, et une ténacité de 2 0-2 9 cN/dtex mesuré selon la norme ISO 5079:2020.

**18.** Fibre textile de carbamate de cellulose selon la revendication 17, présentant une teneur en p-téréphtalate et/ou en acide p-téréphtalique et/ou en polyester non hydrolysé ou partiellement non hydrolysé de 0,00005-0,5 % en poids, déterminée par chromatographie en phase gazeuse-spectrométrie de masse.

**19.** Fibre textile en carbamate de cellulose selon la revendication 17 ou 18, présentant un module initial de 50-120 cN/dtex mesuré selon la norme ISO 5079:2020, de préférence une densité linéaire de 1,1-1,5 dtex et une ténacité de 2,1-2,8. cN/dtex, et un module initial de 70-120 cN/dtex.

**20.** Utilisation d'une fibre textile en carbamate de cellulose présentant une densité linéaire de 0,8-1,8 dtex et une ténacité de 2,0-2,9 cN/dtex dans un fil, un textile, un tissu tissé ou tricoté, un vêtement textile ou un non-tissé.

**21.** Fil, textile, tissu tissé ou tricoté, vêtement textile ou article non tissé, comprenant la fibre textile en carbamate de cellulose présentant une densité linéaire de 0,8-1,8 dtex et une ténacité de 2,0-2,9 cN/dtex.

Fig. 1

**EP 4 460 595 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1470162 A1
- EP 1509548 A1
- WO 2021038136 A1
- GB 2164942 B
- WO 2018169479 A
- WO 2020171767 A
- US 2016138200 A
- WO 2021181007 A
- FI 112869
- FI 112795
- FI 20195717
- WO 2021038136 A